# NEUE EUROPÄISCHE PATENTSCHRIFT

(11) **EP 0 759 502 B2**
(45) Veröffentlichungstag und Bekanntmachung des Hinweises auf die Entscheidung über den Einspruch: **26.03.2003**
(45) Hinweis auf die Patenterteilung: 15.04.1998
(21) Anmeldenummer: 95112819.8
(22) Anmeldetag: 16.08.1995
(51) Int. Cl.: F01N 7/18, F01N 7/08, F16L 27/10

(54) **Ausgleichsanordnung**
Compensating system
Système compensateur

(43) Veröffentlichungstag der Anmeldung: 26.02.1997
(73) Patentinhaber: BENTELER AG, D-33104 Paderborn (DE)
(72) Erfinder: Kleinschmidt, Jürgen, D-37688 Beverungen (DE); Fritz, Andreas, D-33184 Altenbeken (DE)
(74) Vertreter: Bockermann, Rolf, Dipl.-Ing.

(56) Entgegenhaltungen:
- EP-A- 0 208 128
- EP-A- 0 391 026
- EP-A- 0 398 086
- DE-A- 3 321 382
- DE-A- 4 233 644
- DE-C- 4 317 334
- DE-U- 9 212 855
- DE-U- 9 301 772
- GB-A- 2 125 502
- US-A- 5 331 810

## Beschreibung

Ausgleichsanordnungen der in Rede stehenden Art werden eingesetzt, um die in allen drei Raumachsen erfolgenden Bewegungen eines begrenzt elastisch aufgehängten Verbrennungsmotors relativ zu wenigstens einem Abgasrohr aufzufangen.

In diesem Zusammenhang sind Schiebesitzkonstruktionen bekannt, die jedoch eine nur bedingte Lebensdauer besitzen. Bei diesen Konstruktionen nutzt die Schiebesitzwirkung den Effekt des elastischen Dehnungsbereichs des Stahls aus, welcher aber bei Temperaturwechselbelastungen zeitlich nur begrenzt wirksam und somit nach einer bestimmten Zeit nicht mehr funktionsfähig ist.

Zum Stand der Technik zählt ferner eine Ausgleichsanordnung, bei welcher die im Abstand voneinander befindlichen benachbarten Enden von zwei ein heißes Abgas aus einem Verbrennungsmotor führenden Rohrabschnitten durch ein flexibles Brückenglied in Form eines Wellrohrs miteinander verbunden sind. Die zylindrischen Enden des Wellrohrs werden umfangsseitig der Enden der Rohrabschnitte verschweißt. Zwischen den Stimseiten der Rohrabschnitte ist ein Liner verpreßt. Das Wellrohr wird von einer metallischen Umflechtung umhüllt, welche mittels Endhülsen auf den Rohrabschnitten festgelegt sind.

Die GB-A 2 125 502 offenbart eine Ausgleichsanordnung, bei welcher ein das Abgas zuführender Rohrabschnitt über seinen im Durchmesser vergrößerten Abgas-Eintrittsbereich zusammen mit einem zylindrischen Endabschnitt eines als Wellrohr gestatteten Brükkenglieds in einer Bohrung eines Befestigungsflansches durch Schweißung gasdicht befestigt sind. Ferner ist mit dem zuführenden Rohrabschnitt und dem Brückenglied ein im Durchmesser eingezogener Endabschnitt einer das Brückenglied ummantelnden Hülse in der Bohrung festgeschweißt. Das freie Ende des zuführenden Rohrabschnitts liegt im Übergangsbereich von dem das Abgas weiterleitenden Rohrabschnitt auf eine mit diesem Rohrabschnitt verbundene Hülse. Die Hülse erweitert sich in Richtung auf den Befestigungsflansch. Innenseitig des im Durchmesser größten Längenabschnitts ist der zylindrische Endabschnitt des Brückenglieds festgeschweißt. Umfangsseitig des im Durchmesser größten Längenbereichs der Hülse verläutt ein Radialflansch. Beidseitig dieses Radialflansches liegen Dämpfungs- bzw. Ausgleichsglieder, welche von einem im Querschnitt trapezförmigen Mantel übergriffen werden, der zumindest mittelbar Bestandteil der am Befestigungsflansch angeschweißten Hülse bildet.

Der Erfindung liegt ausgehend vom Stand der Technik die Aufgabe zugrunde, eine Ausgleichsanordnung zu schaffen, die bei einfacher wirtschaftlicher Ausbildung sowohl die Gasdichtheit gewährleistet als auch axiale Wärmedehnungen der Rohrabschnitte aufnehmen kann.

Hinsichtlich der gasdichten Kopplung von zwei aufeinander folgenden Abgasrohren besteht die Lösung dieser Aufgabe in den Merkmalen des Anspruchs 1.

Der zuführende Rohrabschnitt kann hierbei einen einstückigen Bestandteil des zuführenden Abgasrohrs bilden. Er kann aber auch ein gesonderter Bauteil sein. In diesem Fall ist der im Durchmesser größere Endbereich des zuführenden Rohrabschnitts umfangsseitig des zuführenden Abgasrohrs befestigt, insbesondere gasdicht angeschweißt. Der Übergang von dem größeren auf den kleineren Endbereich ist gleichmäßig kontinuierlich und ohne scharfe Kanten.

Als Brückenglied zum Ausgleich der axialen Relativbewegungen der Rohrabschnitte sieht die Erfindung einen sich radial erstreckenden membranartigen Radialflansch vor. Dieser bildet einen einstückigen Bestandteil eines sich zu dem weiterleitenden Rohrabschnitt axial erstreckenden Stutzens. Der Stutzen übergreift den Endbereich des weiterleitenden Rohrabschnitts und ist an diesem gasdicht, insbesondere durch Schweißen, festgelegt. Der kreisringförmige Randbereich des Radialflansches ist mit einem ebenfalls kreisringförmigen, sich radial erstreckenden Randbereich eines im wesentlichen konisch gestalteten Stützrings gasdicht verbunden, welcher seinerseits über einen axial ausgerichteten Stutzen umfangsseitig des zuführenden Rohrabschnitts gasdicht befestigt, insbesondere angeschweißt, ist.

Durch den Stützring und durch das Bruckenglied wird mithin umfangsseitig des Steckbereichs der beiden Rohrabschnitte ein nach außen hin gasdicht abgeschotteter Raum gebildet, der axiale Relativbewegungen und Schwenkbewegungen der Rohrabschnitte zuläßt Die Randbereiche des Stützrings und des Radialflansches sind zwischen Drahtgeflechtringen eingespannt, die sich ihrerseits in der Ummantelung abstützen. Dadurch wird sichergestellt, daß die Drahtgeflechtringe nach Schwenkbewegungen das Bestreben haben, die beiden Rohrabschnitte stets wieder axial auszurichten.

Der besondere Vorteil der erfindungsgemäßen Ausgleichsanordnung ist ihr extrem einfacher Aufbau und ein sehr geringer Einbauraum bei einwandfreier Gasdichtheit.

Die ausgleichende Funktion des Radialflansches des Brückenglieds wird gemäß den Merkmalen des Anspruchs 2 dadurch weiter verbessert, daß er zwischen dem Stutzen und dem kreisringförmigen Randbereich mit wenigstens einer Wellung versehen ist.

Zur Aufnahme der Drahtgeflechtringe und zum Schutz des Brückenglieds sowie des Stützrings dienen die Merkmale des Anspruchs 3. Zweckmäßig ist der Stutzen des topfartigen Gehäuses an den weiterleitenden Rohrabschnitt angeschweißt. In diesem Zusammenhang ist es besonders vorteilhaft, wenn bei diesem Festlegen zugleich auch der Stutzen des Brückenglieds am weiterleitenden Rohrabschnitt gasdicht festgeschweißt wird. Der insbesondere kreisringförmige Dekkel der Ummantelung wird bevorzugt lösbar dem Gehäuse zugeordnet. Bei der Festlegung des Deckels am Gehäuse werden die Drahtgeflechtringe und damit auch die kreisringförmigen Randbereiche des Brückenglieds und des Stützring in der Ummantelung zwischen dem Deckel und dem Boden des Gehäuses lagemäßig fixiert.

Da es sich bei dem Brückenglied zweckmäßig um ein dünnwandiges Material handelt, ist es entsprechend Anspruch 4 von Vorteil, daß für eine einwandfreie Verbindung der Randbereiche des Brückenglieds und des Stützrings auf der dem Randbereich des Stützrings abgewandten Seite des Brückenglieds ein Anschweißring vorgesehen wird. Die Breite des Anschweißrings entspricht dann bevorzugt der Breite der Randbereiche.

Die im Anspruch 5 gekennzeichnete Lösung der der Erfindung zugrundeliegenden Aufgabe gelangt zur Anwendung, wenn ein sich unmittelbar von einem am Motorblock fixierten Befestigungsflansch aus erstreckender Rohrabschnitt als Bestandteil eines Abgas weiterleitenden Abgasrohrs zu dem Befestigungsflansch relativbeweglich orientiert werden soll. In diesem Fall wird der zuführende Rohrabschnitt vergleichsweise kurz bemessen und zylindrisch ausgebildet. Der dem weiterleitenden Rohrabschnitt abgewandte Endbereich des zuführenden Rohrabschnitts wird zusammen mit einem zylindrischen Endabschnitt eines als Wellrohr gestalteten Brückenglieds in einer Bohrung des Befestigungsflansches, insbesondere durch Schweißen, festgelegt. Das andere Ende des Brückenglieds, welches ebenfalls zylindrisch gestaltet ist, umfaßt den weiterleitenden Rohrabschnitt im Abstand von dem Steckbereich und ist hier an der äußeren Oberfläche bevorzugt durch Schweißen festgelegt.

Zum Schutz des Brückenglieds und um stets die axiale Ausrichtung der Bohrung im Befestigungsflansch bzw. des zuführenden Rohrabschnitts zum Endbereich des weiterleitenden Rohrabschnitts sicherzustellen, ist eine das Brückenglied im Abstand übergreifende Hülse vorgesehen, die mit einem dem Befestigungsflansch abgewandten, im Durchmesser kleineren zylindrischen Endabschnitt am weiterleitenden Rohrabschnitt festgelegt, insbesondere geschweißt, ist. An dem dem Befestigungsflansch zugewandten und zu diesem distanzierten Ende weist die Hülse mehrere radial nach außen abgekantete Stege auf, die zwischen die beiden axial hintereinander liegenden Drahtgeflechtringe greifen. Die Drahtgeflechtringe sind also umfangsseitig der Hülse vorgesehen und stützen sich somit an dieser, am Befestigungsflansch bzw. an einem die Drahtgeflechtringe umgebenden Konusgehäuse ab, das an den Befestigungsflansch geschweißt ist.

Um eine vorzeitige Abkühlung des Abgases vor einem Katalysator zu verhindern, ist entsprechend den Merkmalen des Anspruchs 6 vorgesehen, daß der weiterleitende Rohrabschnitt unter Bildung eines Luftspalts doppelwandig ausgebildet ist. In diesem Fall ist der dem Befestigungsflansch abgewandte Endabschnitt des Brückenglieds am Innenrohr festgelegt, während der zylindrische Endabschnitt der Hülse an der äußeren Oberfläche des Außenrohrs befestigt, insbesondere durch Schweißung festgelegt, ist.

Die Erfindung ist nachfolgend anhand von in den Zeichnungen dargestellten Ausführungsbeispielen näher erläutert. Es zeigen:
- Figur 1: im vertikalen Längsschnitt eine Ausgleichsanordnung zwischen zwei axial hintereinander angeordneten Abgasrohren;
- Figur 2: im vertikalen Querschnitt eine Ausgleichsanordnung zwischen einem Flansch und einem Abgasrohr und
- Figur 3: eine Variante der Ausführungsform der Figur 2.

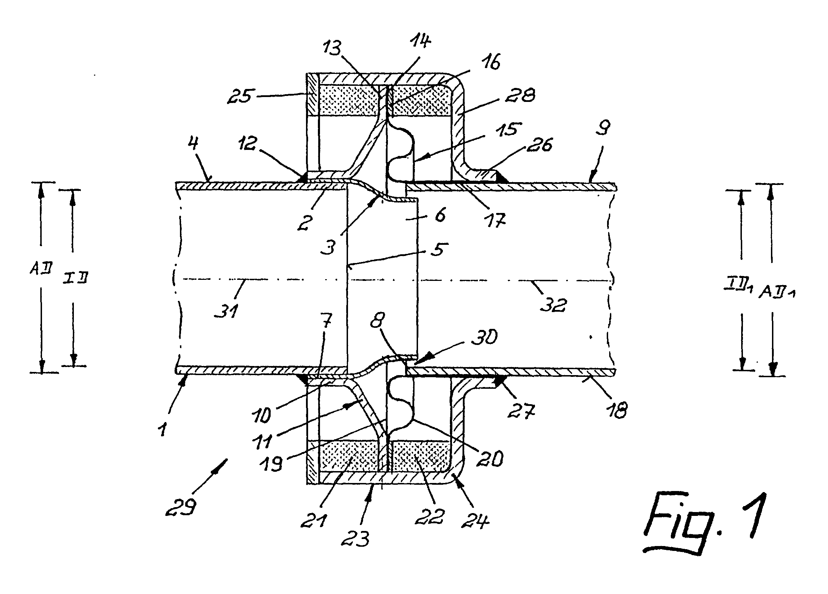

In der Figur 1 ist mit 1 ein Abgasrohr bezeichnet, das in nicht näher bezeichneter Weise an einen Motorblock eines Verbrennungsmotors angeschlossen ist. Am Ende 2 des Abgas zuführenden Abgasrohrs 1 ist ein von der Wandung her dünnerer Rohrabschnitt 3 aufgeschoben und mit seinem Endbereich 7 an der äußeren Oberfläche 4 des Abgasrohrs 1 gasdicht angeschweißt. Der über die Stirnseite 5 des Abgasrohrs 1 vorstehende Endbereich 6 des Rohrabschnitts 3 ist im Durchmesser eingezogen und faßt in den angrenzenden Endbereich 8 eines das Abgas weiterleitenden Rohrabschnitts 9 ein. Das Spiel zwischen dem einfassenden Endbereich 6 und dem umfassenden Endbereich 8 ist so bemessen, daß auch in extremen Winkellagen des Abgasrohrs 1 zum weiterleitenden Rohrabschnitt 9 kein metallischer Kontakt zwischen dem Rohrabschnitt 3 und dem Rohrabschnitt 9 stattfinden kann.

Der Innendurchmesser ID des Abgasrohrs 1 entspricht dem Innendurchmesser ID1 des Rohrabschnitts 9 und der Außendurchmesser AD des Abgasrohrs 1 entspricht dem Außendurchmesser AD1 des Rohrabschnitts 9.

Am Umfang des im Durchmesser größeren Endbereichs 7 des Rohrabschnitts 3 ist ein sich axial erstrekkender Stutzen 10 eines konischen Stützrings 11 gasdicht befestigt. Die gasdichte Befestigung erfolgt durch dieselbe Schweißnaht 12, mit der auch der Rohrabschnitt 3 an der äußeren Oberfläche 4 des Abgasrohrs 1 festgelegt ist.

Der Stützring 11 besitzt einen sich radial erstrekkenden kreisringförmigen Randbereich 13, der mit einem sich ebenfalls radial erstreckenden kreisringförmigen Randbereich 14 eines dünnwandigen flexiblen Brückenglieds 15 gasdicht verschweißt ist. Zu diesem Zweck ist auf der dem Randbereich 13 des Stützrings 11 abgewandten Seite des Randbereichs 14 des Brükkenglieds 15 ein Anschweißring 16 vorgesehen. Die Breite des Anschweißrings 16 entspricht der Breite der Randbereiche 13, 14.

Das Brückenglied 15 weist einen sich axial erstrekkenden Stutzen 17 auf, der an der äußeren Oberfläche 18 des weiterleitenden Rohrabschnitts 9 gasdicht festgeschweißt ist. Zwischen dem Stutzen 17 und dem kreisringförmigen Randbereich 14 ist der Radialflansch 19 des Brückenglieds 15 mit einer Wellung 20 versehen.

Die Randbereiche 13, 14 des Stützrings 11 und des Brückenglieds 15 sowie der Anschweißring 16 sind zwischen zwei Drahtgeflechtringen 21, 22 eingespannt, die innerhalb einer Ummantelung 23 liegen, die sich aus einem topfförmigen Gehäuse 24 und einem kreisringförmigen Deckel 25 zusammensetzt. Das topfförmige Gehäuse 24 ist mit einem sich axial erstreckenden Stutzen 26 an der äußeren Oberfläche 18 des weiterleitenden Rohrabschnitts 9 festgeschweißt. Die Verbindung erfolgt durch dieselbe Schweißnaht 27, mit der auch der Stutzen 17 des Brückenglieds 15 an der äußeren Oberfläche 18 des Rohrabschnitts 9 festgelegt ist Die Drahtgeflechtringe 21, 22 werden mit Hilfe des Deckels 25 zwischen diesem und dem Boden 28 des Gehäuses 24 festgelegt.

Es ist zu sehen, daß durch die Ausgleichsanordnung 29 zwischen dem Abgas zuführenden Rohrabschnitt 3 und dem Abgas weiterleitenden Rohrabschnitt 9 aufgrund der gasdichten Festlegung des Stützrings 11 an dem Abgasrohr 1, welches ggf. einteilig mit dem Abgas zuführenden Rohrabschnitt 3 ausgebildet sein kann, durch die gasdichte Festlegung des Stutzens 17 des Brückenglieds 15 an dem weiterleitenden Rohrabschnitt 9 sowie durch die gasdichte Verbindung der Randbereiche 13, 14 von Stützring 11 und Brückenglied 15 der Steckbereich 30 zwischen den Rohrabschnitten 3, 9 einwandfrei gasdicht überbrückt ist. Die Drahtgeflechtringe 21, 22 erlauben zwar eine Abwinklung der Rohrabschnitte 3, 9 zueinander, bewirken jedoch aufgrund der ihnen innewohnenden Rückstellkraft stets wieder eine Ausrichtung der Längsachse 31 des Abgasrohrs 1 zu der Längsachse 32 des weiterleitenden Rohrabschnitts 9.

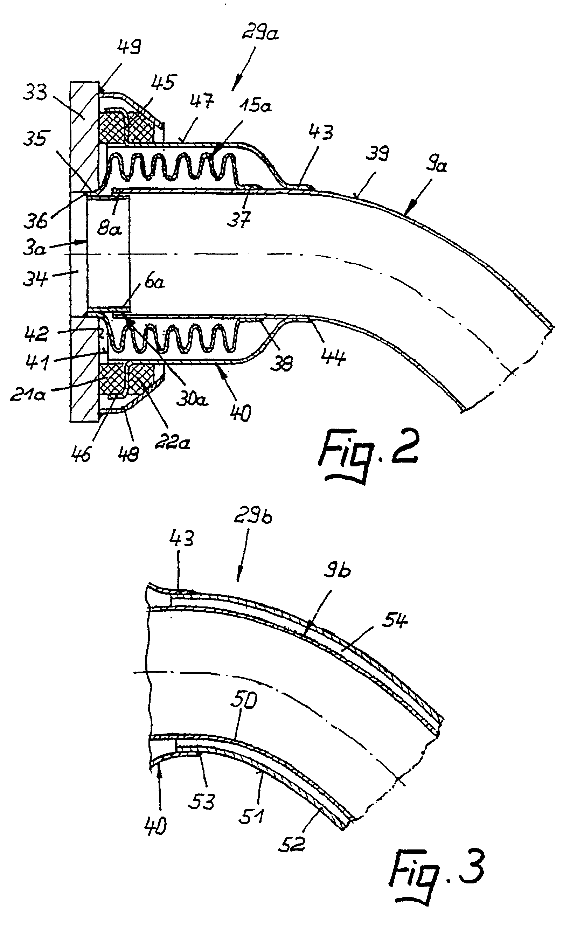

Die in der Figur 2 veranschaulichte Ausgleichsanordnung 29a umfaßt einen rechteckigen Befestigungsflansch 33, der in nicht näher dargestellter Weise an einem Motorblock eines Verbrennungsmotors fixiert ist. Der Befestigungsflansch 33 weist eine zentrale Bohrung 34 auf, in welcher ein zylindrischer Endabschnitt 35 eines als Wellrohr ausgebildeten Brückenglieds 15a und ein Abgas zuführender zylindrisch ausgebildeter Rohrabschnitt 3a mittels einer Schweißnaht 36 festgelegt sind.

Der dem Befestigungsflansch 33 abgewandte Endbereich 6a des Rohrabschnitts 3a faßt in den angrenzenden Endbereich 8a eines das Abgas weiterleitenden Rohrabschnitts 9a mit Spiel ein. Das Spiel ist so groß bemessen, daß es auch bei Schrägstellungen der Rohrabschnitte 3a und 9a zu keinem metallischen Kontakt zwischen den Rohrabschnitten 3a und 9a kommen kann.

Der dem Befestigungsflansch 33 abgewandte, ebenfalls zylindrische Endabschnitt 37 des Brückenglieds 15a ist mittels einer Schweißnaht 38 an der äußeren Oberfläche 39 des Rohrabschnitts 9a gasdicht befestigt. Auf diese Weise wird der Steckbereich 30a der Rohrabschnitte 3a und 9a gasdicht ausgebildet.

Das Brückenglied 15a wird von einer Hülse 40 im Abstand übergriffen, deren dem Befestigungsflansch 33 zugewandte Stirnseite 41 zu der angrenzenden Stirnseite 42 des Befestigungsflansches 33 distanziert ist. Das andere Ende 43 der Hülse 40 ist im Durchmesser eingezogen sowie zylindrisch ausgebildet und mittels einer Schweißnaht 44 an der äußeren Oberfläche 39 des Abgas weiterleitenden Rohrabschnitts 9a festgelegt.

In dem dem Befestigungsflansch 33 benachbarten Endbereich besitzt die Hülse 40 mehrere radial nach außen weisende Stege 45 mit endseitigen, zum Befestigungsflansch 33 gerichteten Schenkeln 46. Beiderseits der Stege 45 befinden sich Drahtgeflechtringe 21a, 22a. Ein Drahtgeflechtring 21a ist durch die Stirnseite 42 des Befestigungsflansches 33, die äußere Oberfläche 47 der Hülse 40, die Stege 45 sowie die Schenkel 46 gekammert, während der andere Drahtgeflechtring 22a durch die äußere Oberfläche 47 der Hülse 40, die Stege 45 sowie ein Konusgehäuse 48 gekammert ist, das an der Stirnseite 42 des Befestigungsflansches 33 durch eine Schweißnaht 49 festgelegt ist.

Die Ausführungsform einer Ausgleichsanordnung 29b gemäß der Figur 3 unterscheidet sich von derjenigen der Figur 2 dadurch, daß der Abgas weiterleitende Rohrabschnitt 9b doppelwandig ausgebildet ist. Während der dem Befestigungsflansch 33 abgewandte zylindrische Endabschnitt 37 des Brückenglieds 15a an dem Innenrohr 50 festgeschweißt ist, wie auch in der Figur 2 dargestellt, ist der zylindrische Endabschnitt 43 der Hülse 40 an der äußeren Oberfläche 51 des Außenrohrs 52 mittels einer Schweißnaht 53 befestigt. Durch die Doppelwandigkeit wird ein kreisringförmiger Spalt 54 geschaffen, welcher eine frühzeitige Abkühlung des Abgases verhindert.

### Bezugszeichenaufstellung

- 1 -: Abgasrohr
- 2 -: Ende v. 1
- 3 -: Rohrabschnitt
3a - Rohrabschnitt
- 4 -: Oberfläche v. 1
- 5 -: Stimseite v. 1
- 6 -: Endbereich v. 3
6a - Endbereich v. 3a
- 7 -: Endbereich v. 3
- 8 -: Endbereich v. 9
8a - Endbereich v. 9a
- 9 -: Rohrabschnitt
9a - Rohrabschnitt
9b - Rohrabschnitt
- 10 -: Stutzen v. 11
- 11 -: Stützring
- 12 -: Schweißnaht
- 13 -: Randbereich v. 11
- 14 -: Randbereich v. 15
- 15 -: Brückenglied
15a - Brückenglied
- 16 -: Anschweißring
- 17 -: Stutzen v. 15
- 18 -: Oberfläche v. 9
- 19 -: Radialflansch v. 15
- 20 -: Wellung in 19
- 21 -: Drahtgeflechtring
21a - Drahtgeflechtring
- 22 -: Drahtgeflechtring
22a - Drahtgeflechtring
- 23 -: Ummantelung
- 24 -: Gehäuse
- 25 -: Deckel f. 24
- 26 -: Stutzen v. 24
- 27 -: Schweißnaht
- 28 -: Boden v. 24
- 29 -: Ausgleichsanordnung
29a - Ausgleichsanordnung
29b - Ausgleichsanordnung
- 30 -: Steckbereich v. 3 u. 9
30a - Steckbereich v. 3a u. 9a
- 31 -: Längsachse v. 1
- 32 -: Längsachse v. 9
- 33 -: Befestigungsflansch
- 34 -: Bohrung in 33
- 35 -: zylindrischer Endabschnitt v. 5a
- 36 -: Schweißnaht
- 37 -: zylindrischer Endabschnitt v. 15a
- 38 -: Schweißnaht
- 39 -: Oberfläche v. 9a
- 40 -: Hülse
- 41 -: Stirnseite v. 40
- 42 -: Stirnseite v. 33
- 43 -: Ende v. 40
- 44 -: Schweißnaht
- 45 -: Stege
- 46 -: Schenkel v. 45
- 47 -: Oberfläche v. 40
- 48 -: Konusgehäuse
- 49 -: Schweißnaht
- 50 -: Innenrohr
- 51 -: Oberfläche v. 52
- 52 -: Außenrohr
- 53 -: Schweißnaht
- 54 -: Spalt zw. 50 u. 52
- AD -: Außendurchmesser v. 1
- AD1 -: Außendurchmesserv. 9
- ID -: Innendurchmesser v. 1
- ID1 -: Innendurchmesser v. 9

## Patentansprüche

1. Ausgleichsanordnung zwischen zwei hintereinandergeschalteten und ein heißes Abgas aus einem Verbrennungsmotor führenden, durch ein innerhalb einer Ummantelung (23) vorgesehenes flexibles Brückenglied (15) zueinander begrenzt relativbeweglichen Rohrabschnitten (3, 9), bei welcher der das Abgas zuführende Rohrabschnitt (3) mit einem im Durchmesser verkleinerten Endbereich (6) kontaktfrei in den angrenzenden Endbereich (8) des das Abgas weiterleitenden Rohrabschnitts (9) faßt und mit dem im Durchmesser größeren Endbereich (7) zumindest mittelbar einen gasdichten Bestandteil eines Abgasrohrs (1) bildet, **dadurch gekennzeichnet, daß** das flexible Brückenglied (15) mit einem Stutzen (17) über den Endbereich (8) des weiterleitenden Rohrabschnitts (9) greift und an diesem gasdicht befestigt ist, während ein membranartiger Radialflansch (19) des Brückenglieds (15) mit einem kreisringförmigen Randbereich (14) an einem ebenfalls kreisringförmigen Randbereich (13) eines über einen Stutzen (10) umfangsseitig des zuführenden Rohrabschnitts (3) gasdicht befestigten konischen Stützrings (11) gasdicht anliegt und beide kreisringförmigen Randbereiche (13, 14) zwischen sich zumindest teilweise an der Ummantelung (23) abstützenden Drahtgeflechtringen (21, 22) eingespannt sind.

2. Ausgleichsanordnung nach Anspruch 1, **dadurch gekennzeichnet, daß** der Radialflansch (19) des Brückenglieds (15) zwischen dem Stutzen (17) und dem Randbereich (14) mit wenigstens einer Wellung (20) versehen ist.

3. Ausgleichsanordnung nach Anspruch 1 oder 2, **dadurch gekennzeichnet, daß** die Ummantelung (23) ein mit einem Stutzen (26) umfangsseitig des weiterleitenden Rohrabschnitts (9) befestigtes topfartiges Gehäuse (24) und einen die Drahtgeflechtringe (21, 22) gegen den sich radial erstreckenden Boden (28) des Gehäuses (24) drückenden Deckel (25) aufweist.

4. Ausgleichsanordnung nach einem der Ansprüche 1 bis 3, **dadurch gekennzeichnet, daß** auf der dem Randbereich (13) des Stützrings (11) abgewandten Seite des Brückenglieds (15) ein Anschweißring (16) vorgesehen ist.

5. Ausgleichsanordnung zwischen zwei hintereinandergeschalteten und ein heißes Abgas aus einem Verbrennungsmotor führenden, durch ein innerhalb einer Ummantelung (48) vorgesehenes flexibles Brückenglied (15a) zueinander begrenzt relativbeweglichen Rohrabschnitten (3a, 9a), bei welcher der zylindrisch ausgebildete, das Abgas zuführende Rohrabschnitt (3a) zusammen mit einem zylindrischen Endabschnitt (35) des als Wellrohr gestalteten Brückenglieds (15a) in einer Bohrung (34) eines Befestigungsflansches (33) und der andere ebenfalls zylindrische Endabschnitt (37) des Brükkenglieds (15a) am Abgas weiterleitenden Rohrabschnitt (9a, 9b) gasdicht befestigt sind, wobei das an der außeren Öberfläche (39, 51) des das Abgas weiterleitenden Rohrende (9a,9b) gasdicht befestigte Brückenglied (15a) mit Abstand von einer Hülse (40) übergriffen ist, die über einen dem Befestigungsflansch (33) abgewandten, im Durchmesser eingezogenen zylindrischen Endabschnitt (43) an der äußeren Oberfläche (39, 51) des weiterleitenden Rohrabschnitts (9a, 9b) befestigt ist und mit radial abgekanteten Stegen (45) am anderen Ende zwischen Drahtgeflechtringe (21a, 22a) faßt, von denen sich ein Drahtgeflechtring (21a) an der Stirnseite (42) des Befestigungsflansches (33) und der andere Drahtgeflechtring (22a) an einem mit dem Befestigungsflansch (33) verbundenen, die Ummantelung (48) bildenden Konusgehäuse abstützt.

6. Ausgleichsanordnung nach Anspruch 5, **dadurch gekennzeichnet, daß** der weiterleitende Rohrabschnitt (9b) unter Bildung eines Luftspalts (54) doppeiwandig ausgebildet ist

## Claims

1. A compensating system between two series-connected pipe sections (3, 9) carrying a hot exhaust gas from an internal combustion engine and movable relatively to one another to a limited degree by means of a flexible bridge member (15) provided inside a sheathing (23), in which system the pipe section (3) carrying the exhaust gas engages, by a reduced-diameter end zone (6), without contact in the adjoining end zone (8) of the pipe section (9) which continues to carry the gas, and, by the larger-diameter end zone (7), forms at least indirectly a gas-tight constituent part of an exhaust gas pipe (1), **characterised in that** the flexible bridge member (15) engages by a neck (17) over the end zone (8) of the continuation pipe section (9) and is secured thereto so as to be gas-tight, while a radial flange (19) in the form of a membrane forming part of the bridge member (15) bears in gas-tight relationship by an edge zone (14) in the form of a circular ring, against an edge zone (13) - likewise in the form of a circular ring - of a conical support ring (11) fixed so as to be gas-tight peripherally of the supplying pipe section (3) via a neck (10), and both edge zones (13, 14) in the form of circular rings are clamped between wire netting rings (21, 22) which at least partially bear against the sheathing (23).

2. A compensating system according to claim 1, **characterised in that** the radial flange (19) of the bridge member (15) is provided with at least one corrugation (20) between the neck (17) and the edge zone (14).

3. A compensating system according to claim 1 or 2, **characterised in that** the sheathing (23) comprises a housing (24) in the form of a pot fixed by a neck (26) peripherally of the continuation pipe section (9) and a cover (25) which presses the wire netting rings (21, 22) against the radially extending base (28) of the housing (24).

4. A compensating system according to any one of claims 1 to 3, **characterised in that** a welding ring (16) is provided on that side of the bridge member (15) which is remote from the edge zone (13) of the support ring (11).

5. A compensating system between two series-connected pipe sections (3a, 9a) carrying a hot exhaust gas from an internal combustion engine and movable relatively to one another to a limited degree by means of a flexible bridge member (15a) provided inside a sheathing (48), in which system the cylindrical pipe section (3a) supplying the exhaust gas, together with a cylindrical end section (35) of the bridge member (15a) formed as a corrugated tube, is fixed to be gas-tight in a bore (34) in a fixing flange (33) and the other likewise cylindrical end section (37) of the bridge member (15a) is fixed to be gas-tight on the continuation pipe section (9a, 9b), wherein the bridge member (15a) fixed to be gas-tight to the outer surface (39, 51) of the continuation pipe end (9a, 9b) has a sleeve (40) engaging thereover with spacing, said sleeve being fixed on the outer surface (39, 51) of the continuation pipe section (9a, 9b) by means of a constricted-diameter cylindrical end section (43) remote from the fixing flange (33), said sleeve engaging by radially bent-off webs (45) at the other end between wire netting rings (21a, 22a), one of which (21a) bears against the end face (42) of the fixing flange (33) and the other (22a) against a conical housing connected to the fixing flange (33) and forming the sheathing (48).

6. A compensating system according to claim 5, **characterised in that** the continuation pipe section (9b) is of double-walled construction to form an air gap (54).

## Revendications

1. Système compensateur entre deux segments tubulaires (3, 9) agencés en succession, guidant un gaz d'échappement chaud hors d'un moteur à combustion interne et pouvant accomplir des mouvements relatifs limités, l'un par rapport à l'autre, par l'intermédiaire d'une pièce flexible d'entretoisement (15) prévue à l'intérieur d'une enveloppe (23), système dans lequel le segment tubulaire (3) amenant le gaz d'échappement s'engage sans aucun contact, par une région extrême (6) de diamètre réduit, dans la région extrême adjacente (8) du segment tubulaire (9) transférant le gaz d'échappement, et forme au moins indirectement, par la région extrême (7) de diamètre supérieur, un élément constitutif d'une tubulure (1) à gaz d'échappement étanche aux gaz,. **caractérisé par le fait que** la pièce flexible d'entretoisement (15) s'emboîte par un embout (17) sur la région extrême (8) du segment tubulaire de transfert (9) et est fixée à celui-ci de façon étanche aux gaz, tandis qu'une collerette radiale (19) de la pièce d'entretoisement (15), du type membrane, est appliquée de manière étanche aux gaz, par une région marginale (14) configurée en anneau circulaire, contre une région marginale (13) pareillement configurée en anneau circulaire d'une bague tronconique d'appui (11) fixée avec étanchéité aux gaz, par l'intermédiaire d'un embout (10), sur le pourtour du segment tubulaire d'amenée (3) et en ce que les deux régions marginales (13, 14) en anneaux circulaires sont enserrées entre des bagues (21, 22) à tressages métalliques, prenant au moins partiellement appui contre l'enveloppe (23).

2. Système compensateur selon la revendication 1, **caractérisé par le fait que** la collerette radiale (19) de la pièce d'entretoisement (15) est pourvue d'au moins une ondulation (20) entre l'embout (17) et la région marginale (14).

3. Système compensateur selon la revendication 1 ou 2, **caractérisé par le fait que** l'enveloppe (23) présente un boîtier du type cuvette fixé par un embout (26) sur le pourtour du segment tubulaire de transfert (9) et un couvercle (25) pressant les bagues (21, 22) à tressages métalliques contre le fond (28) du boîtier (24), s'étendant radialement.

4. Système compensateur selon l'une des revendications 1 à 3, **caractérisé par le fait qu'**une bague (16) rapportée par soudage est prévue sur le côté de la pièce d'entretoisement (15) qui est tourné à l'opposé de la région marginale (13) de la bague d'appui (11).

5. Système compensateur entre deux segments tubulaires (3a, 9a) agencés en succession, guidant un gaz d'échappement chaud hors d'un moteur à combustion interne et pouvant accomplir des mouvements relatifs limités, l'un par rapport à l'autre, par l'intermédiaire d'une pièce flexible d'entretoisement (15a) prévue à l'intérieur d'une enveloppe (48), système dans lequel le segment tubulaire (3a) de réalisation cylindrique, amenant le gaz d'échappement, conjointement à une région extrême cylindrique (35) de la pièce d'entretoisement (15a) conçue comme un tube annelé, dans un trou (34) d'une bride de fixation (33), et l'autre région extrême (37) de la pièce d'entretoisement (15a), semblablement cylindrique, sont fixées de manière étanche aux gaz sur le segment tubulaire (9a, 9b) transférant le gaz d'échappement, dans lequel la pièce d'entretoisement (15a),fixée de manière étanche aux gaz sur la surface extérieure (39, 51) de l'extrémité tubulaire (9a, 9b) transférant le gaz d'échappement, est surmontée, à distance, par une douille (40) qui est fixée, par l'intermédiaire d'une région extrême cylindrique (43) de diamètre resserré, tournée à l'opposé de la bride de fixation (33), à la surface extérieure (39, 51) du segment tubulaire de transfert (9a, 9b), et s'enchâsse à l'autre extrémité, par des membrures (45) coudées radialement, entre des bagues (21a, 22a) à tressages métalliques parmi lesquelles une bague (21a) à tressage métallique prend appui contre le côté frontal (42) de la bride de fixation (33), et l'autre bague (22a) à tressage métallique prend appui contre un boîtier tronconique formant l'enveloppe (48) et relié à la bride de fixation (33).

6. Système compensateur selon la revendication 5, **caractérisé par le fait que** le segment tubulaire de transfert (9b) est réalisé à double paroi en réservant un interstice (54).
